# EUROPÄISCHE PATENTSCHRIFT

(11) **EP 2 087 584 B1**
(45) Veröffentlichungstag und Bekanntmachung des Hinweises auf die Patenterteilung: **03.08.2016**
(21) Anmeldenummer: 07819310.9
(22) Anmeldetag: 25.10.2007
(51) Int. Cl.: H02P 6/24, H02P 3/22, B60L 7/00, B60L 7/08, B60L 7/22, H02P 5/74, B60L 7/06

(54) **TRAKTIONSANTRIEB EINES SCHIENENFAHRZEUGS ZUM ANTREIBEN UND ZUM GENERATORISCHEN BREMSEN**
TRACTION DRIVE OF A RAIL VEHICLE FOR DRIVING AND GENERATIVE BRAKING
ENTRAÎNEMENT PAR TRACTION POUR ENTRAÎNER ET FREINER ÉLECTRIQUEMENT UN VÉHICULE SUR RAILS

(30) Priorität: 31.10.2006 DE 102006051337
(43) Veröffentlichungstag der Anmeldung: 12.08.2009
(73) Patentinhaber: KNORR-BREMSE Systeme für Schienenfahrzeuge GmbH, 80809 München (DE)
(72) Erfinder: HÄHLE, Falk, 82110 Germering (DE); FRIESEN, Ulf, 85579 Neubiberg (DE)
(74) Vertreter: Mattusch, Gundula
(86) Internationale Anmeldenummer: PCT/EP2007/009258
(87) Internationale Veröffentlichungsnummer: WO 2008/052693

(56) Entgegenhaltungen:
- EP-A- 1 520 829
- WO-A-2005/048446
- DE-A1- 10 160 612
- DE-A1-102004 032 680

## Beschreibung

Die Erfindung geht aus von einem Traktionsantrieb zum Antreiben und zum generatorischen Bremsen eines Schienenfahrzeugs oder eines Schienenfahrzeugzuges, gemäß dem Oberbegriff von Anspruch 1.

Ziel in der Ausrüstung von Schienenfahrzeugen ist es, immer effektivere und leichtere Antriebsmaschinen einzusetzen. Als Standardantriebsmaschine wird heute die umrichtergespeiste Asynchronmaschine verwendet. Diese Maschine bietet aber wenig Potential zur Weiterentwicklung in Bezug auf Masseverringerung und Drehmomentdichte und bedingt in ihrer Anwendung bei Schienenfahrzeugen meist ein Getriebe. Deswegen sind derzeit immer mehr Bestrebungen zu erkennen, permanenterregte Synchronmaschinen als Fahrzeugantriebe zu entwickeln und einzusetzen. Diese Maschinenart ermöglicht durch ihre hohe Drehmomentdichte die Realisierung von Direktantrieben und erzielt vor allem durch den Entfall des Getriebes eine sehr hohe Reduzierung der Masse des Antriebsstrangs.

Die permanent erregte Synchronmaschine weist auf Grund ihrer permanenten Erregung einige Besonderheiten im Vergleich zur Asynchrontechnik auf. So ist es z.B. möglich, bei einer rotierenden Maschine zusätzlich zum umrichtergeregelten Generatorbetrieb mit rein passiven Bauteilen eine Bremswirkung zu erzielen. Die durch eine permanent erregte Synchronmaschine erzeugte Bremswirkung durch eine Beschaltung von Bremswiderständen ist aus der gattungsbildenden DE 101 60 612 A1 bekannt.

Bei der Aufschaltung der rotierenden permanent erregten Synchronmaschine mit Bremswiderständen ergibt sich in Abhängigkeit von der Drehzahl des Synchronmotors und damit auch von der Fahrzeuggeschwindigkeit eine charakteristische Momenten- bzw. Kraftkennlinie, die im Weiteren auch als natürliche Bremskennlinie bezeichnet wird. Diese Bremskennlinie besitzt im Verlauf über der Drehzahl/Geschwindigkeit ein Maximum.

Problematisch bei der Anwendung der generatorischen Bremswirkung eines permanent erregten Synchronmotors ist daher, dass die natürliche Bremskennlinie keinen konstanten Bremsmomentenverlauf über der Drehzahl aufweist. Dies bedeutet im Vergleich zur heute üblichen Technik mit geregelter Bremskraft einen Nachteil im Bremsverhalten.

Gemäß EP 1 520 829 A1 ist ein einziger Elektromotor vorhanden, wobei die Impedanz eines Impedanzkreises variiert wird, um das Bremsverhalten an diesen Elektromotor anpassen zu können. Bei DE 10 2004 032 680 A1 werden in einem Impedanzkreis Werte von Widerständen während eines Bremsvorgangs variiert, um die Bremskraft an einen aktuellen Drehzahlwert anzupassen. Es ist allerdings eine elektronische Steuerung oder Regelung notwendig, um den Impedanzkreis während des Bremsvorgangs anpassen zu können.

Der Erfindung liegt die Aufgabe zugrunde, einen Traktionsantrieb der eingangs erwähnten Art derart weiter zu bilden, dass das Bremsverhalten gezielt beeinflusst werden kann.

Erfindungsgemäß wird diese Aufgabe durch die Merkmale von Patentanspruch 1 gelöst.

### Offenbarung der Erfindung

Der grundsätzliche Erfindungsgedanke besteht darin, die den permanenterregten Synchronmotoren zum generatorischen Bremsen zugeschalteten Lastschaltungen derart auszuführen, dass die Bremsenkennlinien der permanenterregten Synchronmotoren hinsichtlich charakteristischer Merkmale wie der Lage des Maximums des Bremsmoments in Abhängigkeit von der Drehzahl unterschiedlich sind.

Mit anderen Worten weisen dann die Bremsenkennlinien der permanent erregten Synchronmotoren trotz identischer Ausführung der Motoren aufgrund der unterschiedlichen Lastschaltungen bei gleicher Drehzahl unterschiedlich große Bremsmomente auf. Wenn beispielsweise die Lastschaltung einer der Synchronmotoren ein Bremsmomentenmaximum bei niedrigen Drehzahlen hervorruft, kann dieses ein demgegenüber geringeres Bremsmoment bei niedrigen Drehzahlen kompensieren, das von einem anderem Synchronmotor des Schienenfahrzeugs aufgrund einer unterschiedlichen Lastschaltung erzeugt wird. In analoger Weise kann der andere Synchronmotor mit Bremsmomentmaximum bei höheren Drehzahlen das dann geringere Bremsmoment des einen Synchronmotors kompensieren.

Dann können zwei oder mehr permanent erregte identische, aber mit unterschiedlichen Lastschaltungen versehene Synchronmotoren so miteinander kombiniert werden, dass durch Überlagerung der dann unterschiedlichen Bremsenkennlinien ein über der Drehzahl möglichst ausgeglichener oder konstanter Bremsmomentenverlauf in Bezug auf ein Drehgestell, einen Schienenfahrzeugteil, ein Einzelfahrzeug wie einen Wagen oder einen Schienenfahrzeugzug erzielt wird. Dies wird durch Abstimmung der passiven Lastschaltungen der einzelnen permanent erregten Synchronantriebe erzielt.

Je mehr Lastschaltungen der einzelnen Antriebe aufeinander abgestimmt werden, desto besser kann der Bremsmomentenverlauf an ein konstantes Bremsmoment angenähert werden. Im einfachsten Fall wie im nachfolgenden Ausführungsbeispiel beschrieben kann dies durch die Verwendung unterschiedlicher Widerstandswerte der Bremswiderstände erfolgen. Es ist aber auch eine beliebige Verschaltung von Widerständen, Kondensatoren und/oder Induktivitäten wie Drosselspulen denkbar. Durch die in den Unteransprüchen aufgeführten Maßnahmen sind vorteilhafte Weiterbildungen und Verbesserungen der in den unabhängigen Ansprüchen angegebenen Erfindung möglich.

Bevorzugt sind die wenigstens zwei Achsen mit wenigstens jeweils einem permanenterregten Synchronmotor, einem maschinenseitigen Traktionsstromrichter, einem Umschalter sowie einer Lastschaltung einem Drehgestell des Schienenfahrzeugs oder des Schienenfahrzeugzuges zugeordnet. Dann ergibt sich je Drehgestell ein annährend konstanter Bremsmomentverlauf.

Generell können sich die Lastschaltungen der den wenigstens zwei Achsen zugeordneten permanenterregten Synchronmotoren durch voneinander abweichende Lastelemente und/oder durch eine voneinander abweichende Verschaltung ihrer Lastelemente unterscheiden. Eine besonders einfache Ausführung ergibt sich, wenn die Lastschaltungen der wenigstens zwei Achsen lediglich unterschiedliche Bremswiderstände aufweisen, wobei die Bremswiderstände der Lastschaltungen beispielsweise derart ausgeführt sind, dass sich das Maximum des Bremsmoments der Bremsenkennlinie des der einen Achse zugeordneten permanenterregten Synchronmotors bei einer niedrigeren Drehzahl einstellt als das Maximum des Bremsmoments der Bremsenkennlinie des der anderen Achse zugeordneten permanenterregten Synchronmotors.

### Zeichnungen

Ein Ausführungsbeispiel der Erfindung ist in der Zeichnung dargestellt und in der nachfolgenden Beschreibung näher erläutert. In der Zeichnung zeigt:
- Fig.1: eine schematische Darstellung eines Traktionsantriebs für ein Wechselstromfahrzeug gemäß einer Ausführungsform der Erfindung;
- Fig.2: eine schematische Darstellung eines Drehgestells mit zwei Achsen, von welchen jede mit einem Traktionsantrieb nach Art von Fig.1 ausgestattet ist;
- Fig.3: Bremsenkennlinien des Traktionsantriebs des Drehgestells von Fig.2.

### Beschreibung des Ausführungsbeispiels

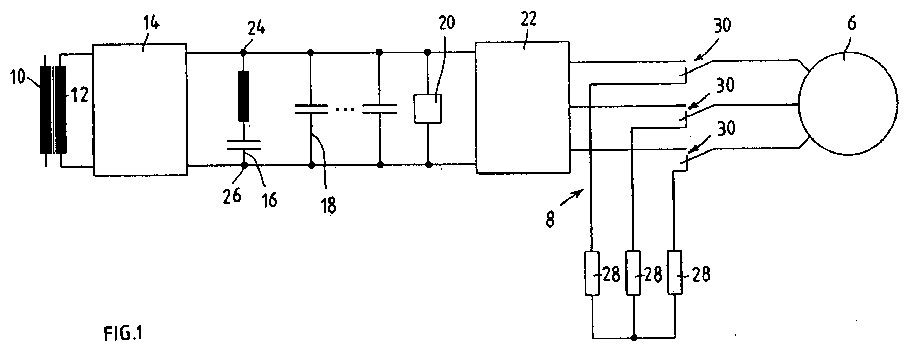

In der Fig.1 ist ein Traktionsantrieb 1 für ein Wechselstromfahrzeug, auch als AC-Schienenfahrzeug bezeichnet, näher dargestellt, wobei mit 2 ein Traktionstransformator, mit 4 ein Traktionsstromrichter, mit 6 ein permanenterregter Synchronmotor und mit 8 eine Bremseinrichtung gekennzeichnet sind. Der Traktionstransformator 2 weist eine Primärwicklung 10 und mehrere Sekundärwicklungen 12 auf, von denen hier nur zwei Sekundärwicklungen 12 dargestellt sind. Der Traktionsstromrichter 4 weist zwei Vierquadranten-Steller 14, einen Saugkreis 16, eine Kondensatorbatterie 18, eine Überspannungs-Schutzeinrichtung 20 und einen maschinenseitigen Pulsstromrichter 22 auf. Die beiden Vierquadranten-Steller 14 sind wechselspannungsseitig jeweils mit einer Sekundärwicklung 12 des Traktionstransformators 2 verknüpft und gleichspannungsseitig elektrisch parallel geschaltet. Elektrisch parallel zu den beiden gleichspannungsseitigen Anschlüssen 24 und 26 dieser Einspeiseschaltung sind der Saugkreis 16, die Kondensatorbatterie 18, die Überspannungs-Schutzeinrichtung 20 und die gleichspannungsseitigen Eingangsanschlüsse des maschinenseitigen Pulsstromrichters 22 geschaltet. Ausgangsseitig ist der maschinenseitige Pulsstromrichter 22 mit Anschlüssen des permanenterregten Synchronmotors 6 verbindbar.

Die Bremseinrichtung 8 besteht pro Phase des permanenterregten Synchronmotors 6 aus einem Bremswiderstand 28 und einem Umschalter 30. Diese Bremswiderstände 28 sind elektrisch beispielsweise in Stern geschaltet und weisen beispielsweise jeweils einen konstanten Widerstandswert auf. Alternativ ist auch eine Dreieckschaltung denkbar. Die Umschalter 30 sind derartig mit den Ausgängen des maschinenseitigen Pulsstromrichters 22 und den Eingängen des permanenterregten Synchronmotors 6 verknüpft, dass die Eingänge des permanenterregten Synchronmotors 6 einerseits mit dem Bremswiderstand 28 und andererseits mit den Ausgängen des maschinenseitigen Pulsstromrichters 22 verbindbar sind.

Diese Umschalter 30, die auch als Fail-Safe-Schalter bezeichnet werden, können elektrisch oder mechanisch oder pneumatisch betätigt werden. Sobald diese Umschalter 30 von der Betriebsstellung "Fahren", d.h., die Klemmen des permanenterregten Synchronmotors 6 sind mit den Ausgängen des maschinenseitigen Pulsstromrichters 22 verbunden, in die Betriebsstellung "Bremsen", d.h., die Klemmen des permanenterregten Synchronmotors 6 sind mit den in Stern geschalteten Bremswiderständen 28 verbunden, gelangt, erzeugt der permanenterregte Synchronmotor 6 ein Bremsmoment, das sich mit der Verringerung der Geschwindigkeit des Schienenfahrzeugs entsprechend dem Verlauf der Bremsenkennlinie verändert. Zur Erzeugung des Bremsmoments wird weder der maschinenseitige Pulsstromrichter 22 noch irgend eine Regelung benötigt.

Ein solcher Traktionsantrieb 1 ist in der eingangs erwähnten DE 101 60 612 A1 ausführlich beschrieben. Deshalb soll hier nicht weiter darauf eingegangen werden.

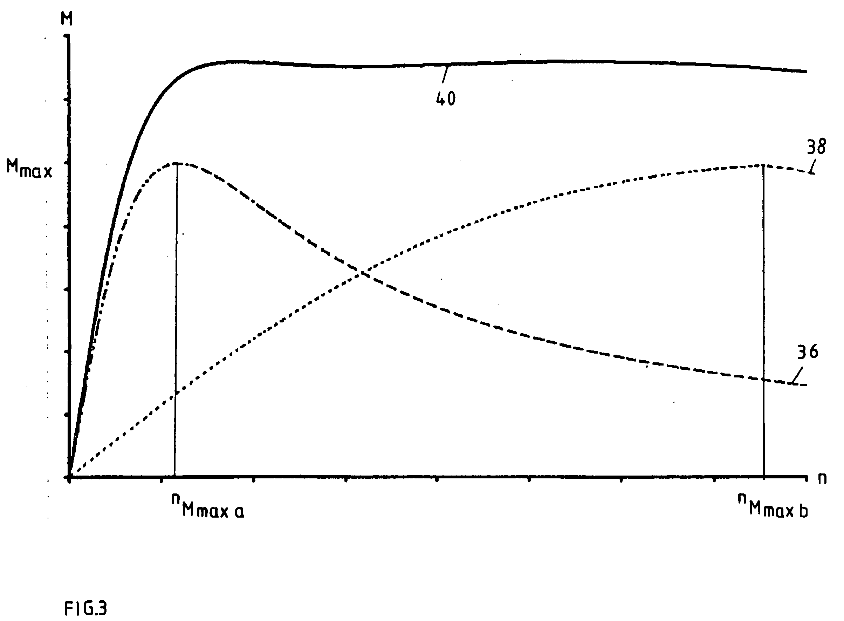

Wenigstens zwei Achsen des AC-Schienenfahrzeugs ist ein solcher permanenterregter Synchronmotor 6 mit Traktionsstromrichter 4 und den weiteren Bauelementen gemäß Fig.1 zugeordnet. Dabei bilden die Bremswiderstände 28 eine dem Synchronmotor 6 zugeordnete Lastschaltung 32, auf welche er zum generatorischen Bremsen durch den Umschalter 30 geschaltet wird. Im generatorischen Bremsbetrieb weist ein solcher Synchronmotor 6 eine Bremsenkennlinie 36 auf, wie sie beispielsweise in Fig.3 durch die gestrichelte Linie dargestellt ist. Unter einer Bremsenkennlinie wird im folgenden der Verlauf des Bremsmoments M oder der Bremskraft F über der Drehzahl n des Synchronmotors 6 verstanden, welche im vorliegenden Fall des Direktantriebs mit der Achsdrehzahl identisch ist. Diese Achsdrehzahl ist proportional zur Fahrgeschwindigkeit des AC-Schienenfahrzeugs. Wie anhand von Fig.3 zu erkennen ist, steigt das Bremsmoment M mit von Null größer werdender Drehzahl n zunächst steil an, um nach Erreichen eines Maximalwerts Mₘₐₓ wieder abzufallen. Diesem maximalen Bremsmoment Mₘₐₓ ist eine Drehzahl n_{Mmax} zugeordnet. Dies stellt einen typischen Verlauf einer Bremskennlinie eines permanent erregten Synchronmotors 6 dar, dem im generatorischen Bremsbetrieb eine Lastschaltung 32 mit Bremswiderständen 28 zugeschaltet ist.

Die Lastschaltungen 32 der den verschiedenen Achsen zugeordneten Synchronmotoren 6 sind derart ausgeführt, dass deren Bremsenkennlinien hinsichtlich der Drehzahl n_{Mmax}, bei welcher sich jeweils das Maximum des Bremsmoments Mₘₐₓ einstellt, unterschiedlich sind. Besonders bevorzugt werden zwei oder mehr permanent erregte identische, aber mit unterschiedlichen Lastschaltungen 32 versehene Synchronmotoren 6 so miteinander kombiniert, dass durch Überlagerung der dann unterschiedlichen Bremsenkennlinien ein über der Drehzahl n möglichst ausgeglichener Bremsmomentenverlauf in Bezug auf ein Drehgestell, einen Schienenfahrzeugteil, ein Einzelfahrzeug wie einen Wagen oder einen Schienenfahrzeugzug erzielt wird. Dies wird durch Abstimmung der passiven Lastschaltungen 32 der einzelnen permanent erregten Synchronmotoren 6 erzielt. Diese Abstimmung erfolgt dabei durch eine entsprechende Auswahl und Verschaltung passiver Lastelemente wie beispielsweise Widerstände, Drosselspulen und/oder Kondensatoren.

Eine Verwendung von kontinuierlich im Wert verstellbaren oder schaltbaren Bremswiderständen 28 vereinfacht eine Abstimmung der Lastschaltungen 32. Im Rahmen der Erfindung wird der jeweilige Widerstandswert der Lastschaltung 32 eines permanenterregten Synchronmotors 6 in Bezug zu den Lastschaltungen 32 der anderen permanenterregten Synchronmotoren 6 vor dem Betrieb der generatorischen Bremse abgestimmt, um sie während des Bremsbetriebs nicht mehr zu verändern.

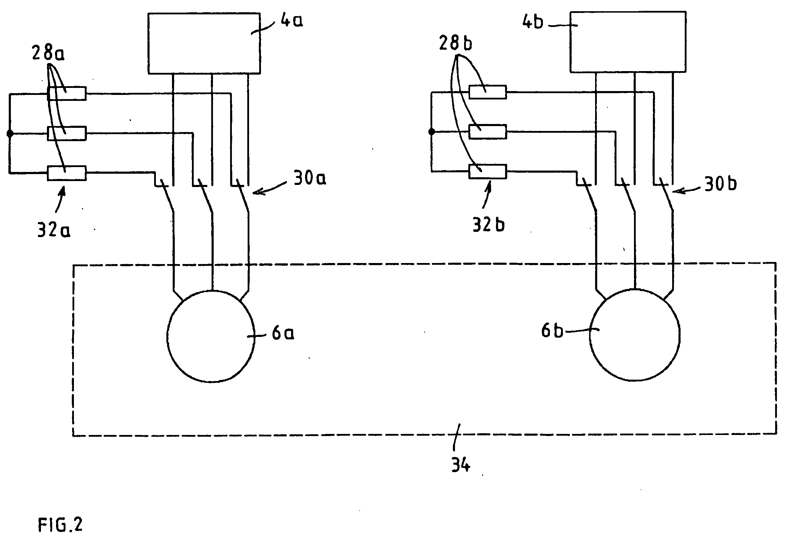

Gemäß eines bevorzugten Ausführungsbeispiels nach Fig.2 weist ein Drehgestell 34 des AC-Schienenfahrzeugs zwei Achsen mit wenigstens jeweils einem permanenterregten Synchronmotor 6a, 6b, einem maschinenseitigen Traktionsstromrichter 4a, 4b, einem Umschalter 30a, 30b sowie einer Lastschaltung 32a, 32b auf.

Jede der beiden Antriebswellen der beiden Achsen des Drehgestells 34 wird von einem permanenterregten Synchronmotor 6a, 6b angetrieben, welche bevorzugt identisch sind wie auch die Traktionsstromrichter 4a, 4b. Jedoch unterscheiden sich die jeweiligen Lastschaltungen 32a, 32b. Vorzugsweise sind in der Lastschaltung 32a des einen permanenterregten Synchronmotors 6a Widerstände 28a mit Widerstandswerten installiert, die größer sind als die Widerstandswerte der Widerstände 28b der Lastschaltung 32b des anderen permanenterregten Synchronmotors 6b.

Der Einfluss unterschiedlicher Widerstände auf die Lage des Maximums des Bremsmoments Mₘₐₓ bzw. der Bremskraft über der Drehzahl n innerhalb der Bremskennlinie ist wie folgt: Es verschiebt sich mit niedrigeren Bremswiderstandswerten in Richtung kleinerer Drehzahlen n oder Geschwindigkeiten bis zum Kurzschluss, d.h. es wirkt nur noch der Innenwiderstand des Antriebs. Umgekehrt gilt, dass sich das Maximum des Bremsmoments Mₘₐₓ mit höheren Bremswiderstandswerten in Richtung größerer Drehzahlen n oder Geschwindigkeiten verschiebt. Jedoch bleibt der Betrag des Maximums des Bremsmoments Mₘₐₓ der Bremskennlinie der Höhe nach gleich, vorausgesetzt, dass sich die Induktivitäten und Kapazitäten im Bremskreis nicht ändern.

Dann hat der eine permanenterregte Synchronmotor 6a das Bremsmomentenmaximum Mₘₐₓ seiner Bremskennlinie 36 (gestrichelte Linie) bei einer niedrigeren Drehzahl n_{Mmax a} als der andere permanenterregte Synchronmotor 6b, dessen Bremsmomentenmaximum Mₘₐₓ seiner Bremskennlinie 38 (gepunktete Linie) bei einer höheren Drehzahl n_{Mmax b} liegt. Das maximale Bremsmoment Mₘₐₓ ist jeweils gleich groß, da eine Variation der Widerstandswerte des maximale Bremsmoment Mₘₐₓ zwar verschiebt, aber der Größe nach nicht ändert.

Bei gleichzeitiger Zuschaltung der Bremswiderstände 28a, 28b durch die Umschalter 30a, 30b zu den entsprechenden permanenterregten Synchronmotoren 6a, 6b ergibt sich durch Überlagerung der Bremsenkennlinien 36 und 38 eine resultierende Bremsenkennlinie 40 für das Drehgestell 34, welche über einen großen Drehzahlbereich, beginnend bei niedrigen Drehzahlen n knapp über Null annähernd konstant verläuft, wie aus Fig.3 hervorgeht. Alternativ könnte man durch Überlagerung von geeigneten Bremsenkennlinien, d.h. durch entsprechend angepasste Lastschaltungen auch einen über der Drehzahl n ansteigenden, abfallenden oder nach Vorgabe beliebigen gewünschten Bremsmomentenverlauf erzielen.

Neben Widerständen 28 oder anstatt solcher kann eine Lastschaltung 32 auch andere passive elektronische Bauelemente wie Kondensatoren und/oder Induktivitäten beispielsweise in Form von Drosselspulen enthalten. Bei einer Parallelschaltung von Widerstand 28 und Kondensator wird beispielsweise das Maximum des Bremsmoments Mₘₐₓ erhöht. Demgegenüber kann durch eine in Reihe zum Widerstand 28 geschaltete Induktivität das Maximum des Bremsmoments Mₘₐₓ des zugeordneten permanent erregten Synchronmotors 6 verringert werden. Generell ist eine Vielzahl von Lastschaltungen 32 denkbar, sei es durch Variation der Widerstands-, Kapazitäts- oder Induktivitätswerte und/oder durch Variation der Verschaltung der einzelnen Bauelemente (parallel oder seriell), deren Kombination gewünschte Eigenschaften der überlagerten Bremskennlinie 40 hervorbringt, wie beispielsweise einen annähernd konstanten Bremsmomentverlauf über der Drehzahl n.

Die Erfindung ist nicht auf Traktionsantriebe von Fahrzeugen beschränkt, die von einem Wechselstromkreis gespeist werden, sondern kann auch bei Traktionsantrieben von Fahrzeugen mit permanent erregten Synchronmotoren angewendet werden, die von einem Gleichstromnetz gespeist werden, wie sie beispielsweise in der DE 101 60 612 A1 beschrieben sind.

### Bezugszahlenliste

- 1: Traktionsantrieb
- 2: Traktionstransformator
- 4: Traktionsstromrichter
- 6: Synchronmotor
- 8: Bremseinrichtung
- 10: Primärwicklung
- 12: Sekundärwicklung
- 14: Vierquadranten-Steller
- 16: Saugkreis
- 18: Kondensatorbatterie
- 20: Überspannungs-Schutzeinrichtung
- 22: Pulstromrichter
- 24: Anschluss
- 26: Anschluss
- 28: Bremswiderstand
- 30: Umschalter
- 32: Lastschaltung
- 34: Drehgestell
- 36: Bremskennlinie
- 38: Bremskennlinie
- 40: Bremskennlinie

## Patentansprüche

1. Traktionsantrieb (1) zum Antreiben und zum generatorischen Bremsen eines Schienenfahrzeugs, wobei wenigstens zwei Achsen des Schienenfahrzeugs oder des Schienenfahrzeugzuges je ein permanenterregter Synchronmotor (6a, 6b) und ein Traktionsstromrichter (4a, 4b) zugeordnet ist und wobei der Traktionsstromrichter (4a, 4b) wenigstens einen maschinenseitigen Pulsstromrichter (22) aufweist und der permanenterregte Synchronmotor (6a, 6b) an seinen Klemmen mit einem Umschalter (30a, 30b) derart verbunden ist, dass der permanenterregte Synchronmotor (6a, 6b) zum Antreiben dem Pulsstromrichter (22) oder zum generatorischen Bremsen einer Lastschaltung (32a, 32b) beinhaltend wenigstens ein Lastelement (28a, 28b) zuschaltbar ist, **dadurch gekennzeichnet, dass** die den permanenterregten Synchronmotoren (6a, 6b) zum generatorischen Bremsen zugeschalteten Lastschaltungen (32a, 32b) derart ausgeführt sind, dass die Bremsenkennlinien (36, 38) der permanenterregten Synchronmotoren (6a, 6b) hinsichtlich charakteristischer Merkmale in Abhängigkeit von der Drehzahl (n) unterschiedlich sind, wobei die Lastschaltungen (32a, 32b) vor dem Betrieb der generatorischen Bremse abgestimmt und während des Bremsbetriebs nicht verändert werden.

2. Traktionsantrieb nach Anspruch 1, **dadurch gekennzeichnet, dass** wenigstens zwei permanent erregte identische, aber mit unterschiedlichen Lastschaltungen (32a, 32b) versehene Synchronmotoren (6a, 6b) so miteinander kombiniert werden, dass durch Überlagerung ihrer Bremsenkennlinien (36, 38) ein über der Drehzahl (n) im wesentlichen konstanter, ansteigender, abfallender oder nach Vorgabe beliebiger Bremsmomentenverlauf (40) erzielt wird.

3. Traktionsantrieb nach Anspruch 1 oder 2, **dadurch gekennzeichnet, dass** die wenigstens zwei Achsen einem Drehgestell (34), einen Schienenfahrzeugteil, einem Einzelfahrzeug oder einem Schienenfahrzeugzug zugeordnet sind.

4. Traktionsantrieb nach wenigstens einem der vorhergehenden Ansprüche, **dadurch gekennzeichnet, dass** sich die Lastschaltungen (32a, 32b) der den wenigstens zwei Achsen zugeordneten permanenterregten Synchronmotoren (6a, 6b) durch voneinander abweichende Lastelemente (28a, 28b) und/oder durch eine voneinander abweichende Verschaltung ihrer Lastelemente unterscheiden.

5. Traktionsantrieb nach Anspruch 4, **dadurch gekennzeichnet, dass** die Lastschaltungen (32a, 32b) Widerstände (28a, 28b) und/oder Kapazitäten und/oder Induktivitäten beinhalten.

6. Traktionsantrieb nach Anspruch 5, **dadurch gekennzeichnet, dass** die Lastschaltungen (32a, 32b) unterschiedliche Bremswiderstände (28a, 28b) aufweisen, derart, dass sich das Maximum des Bremsmoments (Mₘₐₓ) der Bremsenkennlinie (36) des der einen Achse zugeordneten permanenterregten Synchronmotors (6a) bei einer niedrigeren Drehzahl (n) einstellt als das Maximum des Bremsmoments (Mₘₐₓ) der Bremsenkennlinie (38) des der anderen Achse zugeordneten permanenterregten Synchronmotors (6b).

## Claims

1. Traction drive (1) for driving, and for performing regenerative braking of a rail vehicle, wherein at least two axles of the rail vehicle or of the combination of rail vehicles are respectively assigned a permanently excited synchronous motor (6a, 6b) and a traction current converter (4a, 4b) and wherein the traction current converter (4a, 4b) has at least one machine-side pulse current converter (22), and the permanently excited synchronous motor (6a, 6b) is connected at its terminals to a changeover switch (30a, 30b) in such a way that the permanently excited synchronous motor (6a, 6b) can be connected to a load circuit (32a, 32b) containing at least one load element (28a, 28b) in order to drive the pulse current converter (22) or to perform regenerative braking, **characterised in that** the load circuits (32a, 32b) which are connected to the permanently excited synchronous motors (6a, 6b) in order to perform regenerative braking are embodied in such a way that the brake characteristic curves (36, 38) of the permanently excited synchronous motors (6a, 6b) are different in terms of characteristic features as a function of the rotational speed (n), the load circuits (32a, 32b) being tuned before the operation of the regenerative brake and remaining unchanged during the braking operation.

2. Traction drive according to claim 1, **characterised in that** at least two permanently excited synchronous motors (6a, 6b) which are identical but are provided with different load circuits (32a, 32b) are combined with one another in such a way that by superimposing their braking characteristic curves (36, 38) a braking torque profile (40) which is essentially constant, increases or decreases when plotted against the rotational speed (n) or is predefined in any desired way is obtained.

3. Traction drive according to claim 1 or 2, **characterised in that** the at least two axles are assigned to a bogie (34), a rail vehicle component, an individual vehicle or a combination of rail vehicles.

4. Traction drive according to one or more of the preceding claims, **characterised in that** the load circuits (32a, 32b) of the permanently excited synchronous motors (6a, 6b) which are assigned to the at least two axles differ in having load elements (28a, 28b) which are different from one another and/or in having different connections of their load elements.

5. Traction drive according to claim 4, **characterised in that** the load circuits (32a, 32b) contain resistors (28a, 28b) and/or capacitors and/or inductors.

6. Traction drive according to claim 5, **characterised in that** the load circuits (32a, 32b) have different braking resistors (28a, 28b) such that the maximum braking torque (Mₘₐₓ) of the braking characteristic curve (36) of the permanently excited synchronous motor (6a) which is assigned to the one axle occurs at a lower rotational speed (n) than the maximum braking torque (Mₘₐₓ) of the braking characteristic curve (38) of the permanently excited synchronous motor (6b) which is assigned to the other axle.

## Revendications

1. Système de traction (1) d'entraînement et de freinage rhéostatique d'un véhicule ferroviaire, dans lequel un moteur synchrone respectif à excitation permanente (6a, 6b) et un convertisseur de puissance de traction (4a, 4b) sont affectés à au moins deux axes du véhicule sur rails ou du train ferroviaire, et dans lequel ledit convertisseur de puissance de traction (4a, 4b) comprend au moins un convertisseur impulsionnel (22) du côté machine et ledit moteur synchrone à excitation permanente (6a, 6b) est relié par ses bornes à un commutateur (30a, 30b) de telle façon, que ledit moteur synchrone (6a, 6b) à excitation permanente peut être raccordé pour l'entraînement audit convertisseur impulsionnel (22) ou pour le freinage rhéostatique à un circuit de charge (32a, 32b) qui renferme au moins un élément de charge (28a, 28b), **caractérisé en ce que** lesdits circuit de charge (32a, 32b) raccordé auxdits moteurs synchrones (6a, 6b) à excitation permanente pour le freinage rhéostatique sont conçus d'une telle façon, que les lignes caractéristiques de freinage (36, 38) desdits moteurs synchrones (6a, 6b) à excitation permanente soient différentes en ce qui concerne des caractéristiques en fonction de la vitesse (n), auxdits circuits de charge (32a, 32b) étant adaptés l'un à l'autre avant l'opération du frein rhéostatique et n'étant pas modifiés au cours de l'opération de freinage.

2. Système de traction selon la revendication 1, **caractérisé en ce qu'**au moins deux moteurs synchrones (6a, 6b) identiques, à excitation permanente mais pourvus des circuits de charge (32a, 32b) différents sont combinés l'un avec l'autre d'une telle façon, qu'une évolution du couple de freinage (40) essentiellement constante, augmentant, diminuant ou de tout comportement selon la prédétermination sur toute la vitesse (n) soit achevée par superposition de leurs caractéristiques de freinage (36, 38).

3. Système de traction selon la revendication 1 ou 2, **caractérisé en ce que** lesdits au moins deux axes sont affectés à un bogie (34), à une partie du véhicule ferroviaire, à un véhicule individuel ou à un train ferroviaire.

4. Système de traction selon au moins une quelconque des revendications précédentes, **caractérisé en ce que** lesdits circuits de charge (32a, 32b) desdits moteurs synchrones (6a, 6b) à excitation permanente, qui sont affectés auxdits au moins deux axes, se distinguent l'un de l'autre par des éléments de charge (28a, 28b), qui diffèrent l'un de l'autre, et/ou par une connexion différente de leurs éléments de charge.

5. Système de traction selon la revendication 4, **caractérisé en ce que** lesdits circuits de charge (32a, 32b) renferment des éléments résistifs (28a, 28b) et ou des éléments capacitifs et/ou des éléments inductifs.

6. Système de traction selon la revendication 5, **caractérisé en ce que** lesdits circuits de charge (32a, 32b) présentent des résisteurs de freinage différents (28a, 28b) de telle manière, que le maximum du couple de freinage (Mₘₐₓ) de la ligne caractéristique de freinage (36) du moteur synchrone (6a) à excitation permanente, qui est affecté au premier axe, apparaît à une plus petite vitesse (n) que le maximum (Mₘₐₓ) de la ligne caractéristique de freinage (38) du moteur synchrone (6b) à excitation permanente, qui est affecté à l'autre axe.
